# EUROPEAN PATENT SPECIFICATION

(11) **EP 4 481 073 B1**
(45) Date of publication and mention of the grant of the patent: **02.12.2026**
(21) Application number: 24210334.9
(22) Date of filing: 10.03.2023
(51) Int. Cl.: B09B 3/80, C22B 3/06, C22B 7/00, C22B 15/00, C22B 23/00

(54) **METHOD FOR LEACHING METAL AND METHOD FOR RECOVERING METAL**
VERFAHREN ZUR LAUGUNG VON METALL UND VERFAHREN ZUR RÜCKGEWINNUNG VON METALL
PROCÉDÉ DE LIXIVIATION DE MÉTAL ET PROCÉDÉ DE RÉCUPÉRATION DE MÉTAL

(30) Priority: 31.03.2022 JP 2022060711
(43) Date of publication of application: 25.12.2024
(62) Document number(s) of the earlier application(s) in accordance with Art. 76 EPC: 23713980.3 / 4 278 020
(73) Proprietor: JX Metals Circular Solutions Co., Ltd., Tokyo 105-8417 (JP)
(72) Inventor: SHIKADA, Kei, Hitachi-shi,, Ibaraki 3170056 (JP); HIGUCHI, Naoki, Hitachi-shi,, Ibaraki 3170056 (JP); FUJIMOTO, Atsushi, Hitachi-shi,, Ibaraki 3170056 (JP)
(74) Representative: Arnold & Siedsma

(56) References cited:
- CN-A- 111 118 296
- CN-A- 113 174 486
- JP-A- 2017 036 489
- JP-A- 2018 145 449
- KR-B1- 101 011 260

## Description

### [Technical Field]

This specification describes a method for leaching metals and a method for recovering metals.

### [Background Art]

In recent years, the recovery of valuable metals from lithium ion battery waste discarded due to product life, manufacturing defects, or other reasons has been widely studied from the viewpoint of effective utilization of resources.

For example, in order to recover metals from lithium ion battery waste, for example, battery powder obtained through a heat treatment or other treatments is brought into contact with an acidic leaching solution to leach in the acidic leaching solution metals such as nickel, cobalt, manganese, aluminum and iron in the battery powder. This can provide a leached solution in which the metals are dissolved.

Subsequently, as described in Patent Literatures 1 to 3, neutralization or solvent extraction is carried out to remove sequentially or simultaneously aluminum, iron and manganese, among the metals dissolved in the leached solution. Nickel and cobalt are then separated by solvent extraction and concentrated to recover them.

With regard to the leaching of the metals in the battery powder with the acidic leaching solution by such a method for recovering metals, Patent Literature 4 proposes "a method for treating a lithium ion battery, comprising: a leaching step of leaching battery powder in a leaching solution containing 0.9 to 1.5-fold molar equivalents of sulfuric acid required for dissolving all metal components contained in the battery powder, and terminating the leaching before an oxidation-reduction potential ORP value (on silver/silver chloride potential basis) of the leaching solution exceeds 0 mV". According to this method, "while the valuable metals added to the leaching solution are sufficiently dissolved, many copper can be in a solid state at the end of the leaching", and "this can lead to easy separation and removal of the solid copper from the leaching solution to simplify or omit the processing required for removal of copper dissolved in the leached solution, thereby improving a processing efficiency and reducing costs".

### [Citation List]

### [Patent Literature]

[PTL 1]
   Japanese Patent Application Publication No. 2010-180439 A
[PTL 2]
   U.S. Patent Application Publication No. 2011/0135547 A1
[PTL 3]
   Japanese Patent Application Publication No. 2014-162982 A
[PTL 4]
   Japanese Patent Application Publication No. 2017-36489 A
[PTL 5]
   Japanese Patent Application JP 2018145449 A
[PTL 6]
   Korean Patent applicatio KR 101011260 B

### [Summary of Invention]

### [Technical Problem]

As described in Patent Literature 4, when copper is left in a solid state at the end of leaching, the copper can be easily removed by solid-liquid separation after leaching. However, in this case, the leaching is terminated before copper begins to be dissolved, resulting in insufficient leaching of cobalt and nickel.

On the other hand, when the leaching time is prolonged for the purpose of improving a leaching rate of cobalt or nickel, the copper begins to be dissolved, which would prevent the copper from being easily separated and removed.

This specification provides a method for leaching at least one metal and a method for recovering at least one metal, which can improve a leaching rate of cobalt and/or nickel while easily removing copper.

### [Solution to Problem]

The method for leaching metals as disclosed herein is described in claims 1 to 12.

The method for recovering at least one metal as disclosed in this specification recovers at least one metal from the leached solution after removing the leached residue in the first leaching step of the leaching process in the method for leaching at least one metal as described above.

### [Advantageous Effects of Invention]

According to the method for leaching at least one metal and the method for recovering at least one metal as described above, it is possible to improve a leaching rate of cobalt and/or nickel while easily removing copper.

### [Brief Description of Drawings]

[Fig. 1]

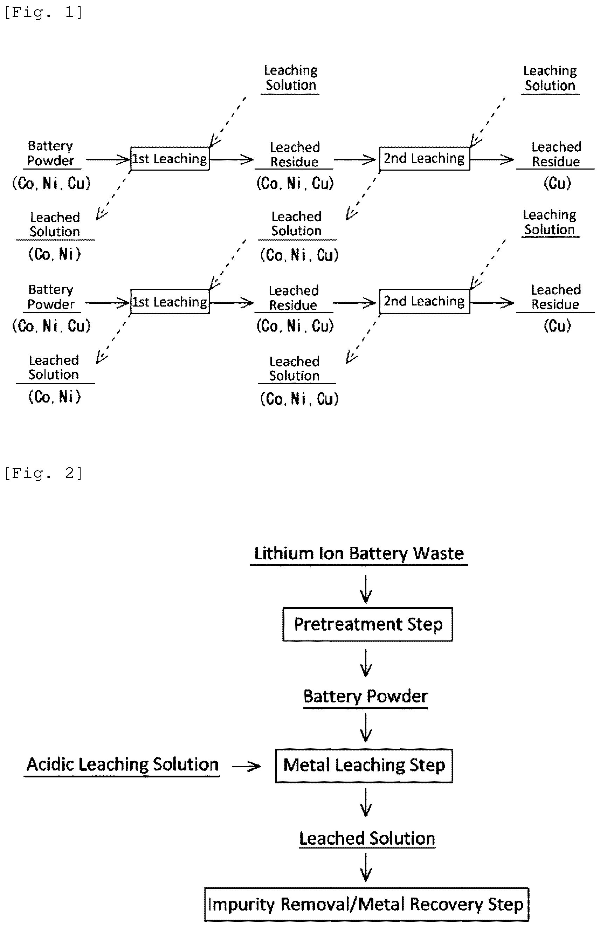

   Fig. 1 is a flowchart illustrating a method for leaching metals according to an embodiment.
[Fig. 2]
   FIG. 2 is a flowchart illustrating an example of a method for recovering metals to which a method for leaching metals according to an embodiment can be applied.
[Fig. 3]

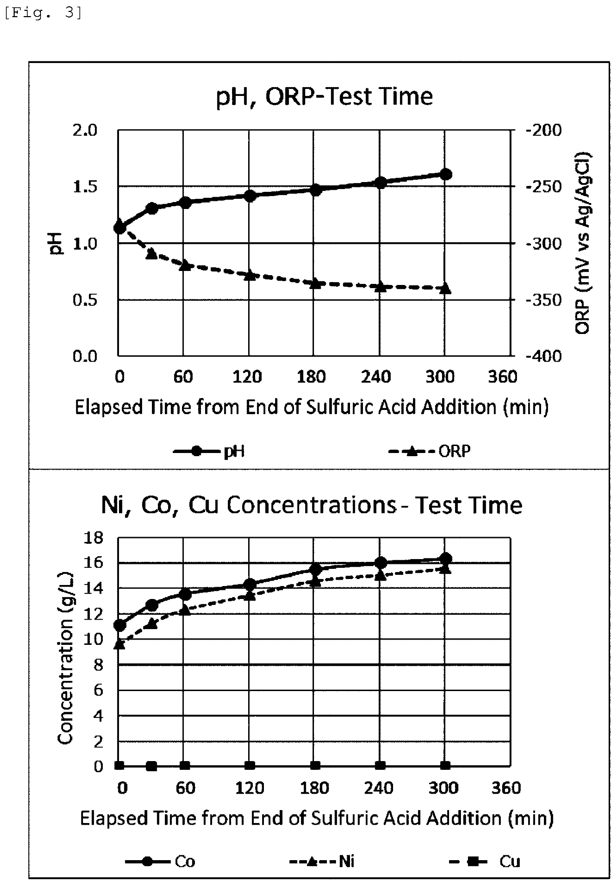

   Fig. 3 is a graph illustrating changes in pH, ORP, and each metal concentration over time in a first leaching step of a first leaching process according to Example 1.
[FIG. 4]

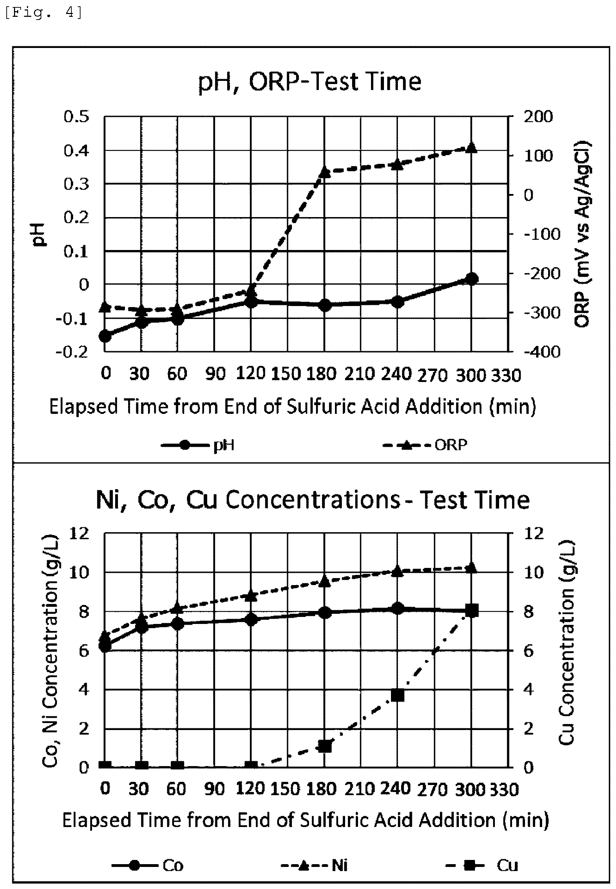

   Fig. 4 is a graph illustrating changes in pH, ORP, and each metal concentration over time in a second leaching step of a first leaching process according to Example 1.
[FIG. 5]

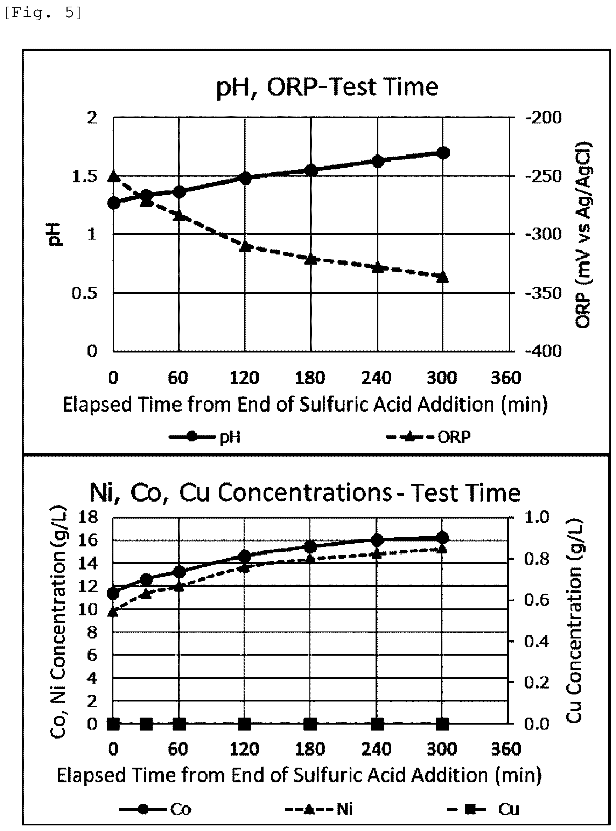

   Fig. 5 is a graph illustrating changes in pH, ORP, and each metal concentration over time in a first leaching step of a second leaching process according to Example 1.
[FIG. 6]

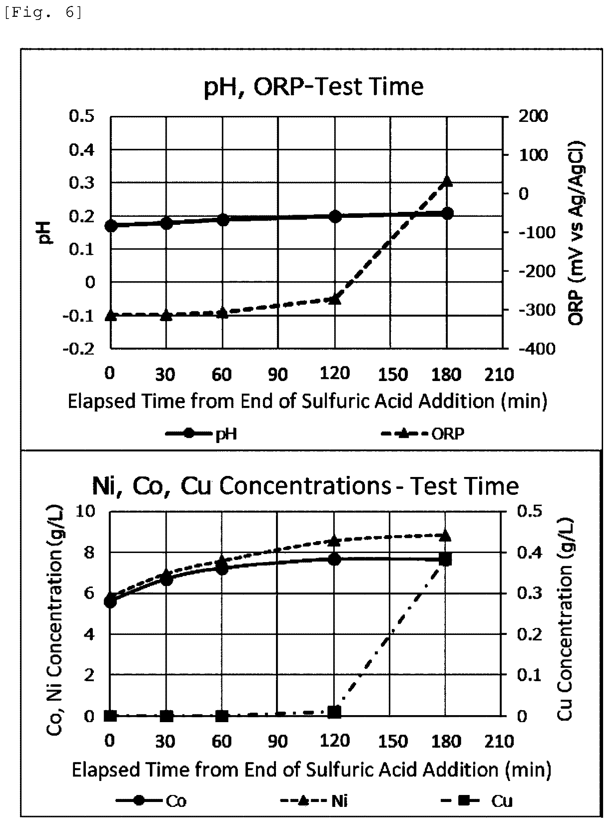

   Fig. 6 is a graph illustrating changes in pH, ORP, and each metal concentration over time in a second leaching step of a second leaching process according to Example 1.
[FIG. 7]

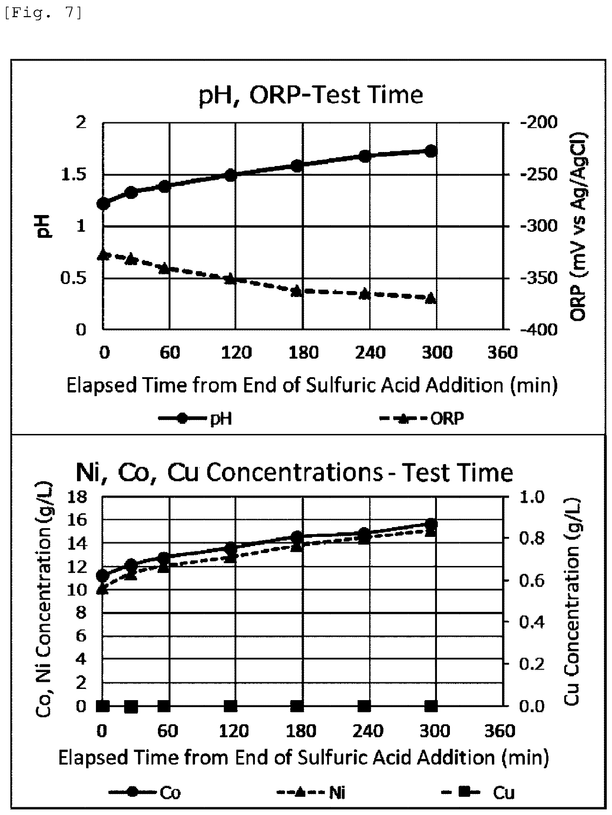

   Fig. 7 is a graph illustrating changes in pH, ORP, and each metal concentration over time in a first leaching step of a third leaching process according to Example 1.
[FIG. 8]

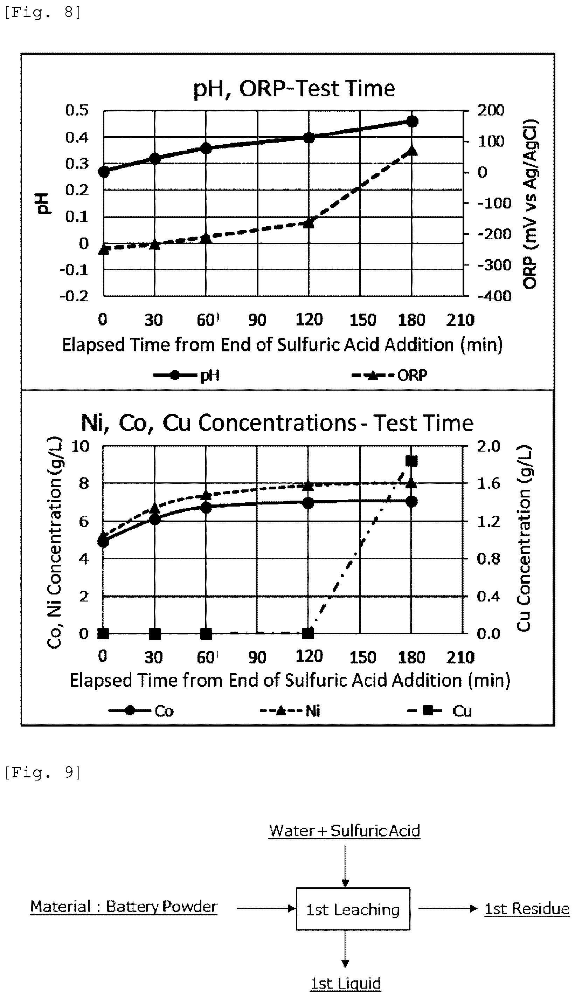

   Fig. 8 is a graph illustrating changes in pH, ORP, and each metal concentration over time in a second leaching step of a third leaching process according to Example 1.
[FIG. 9]
   Fig. 9 is a flowchart illustrating a leaching step according to Comparative Example.
[FIG. 10]

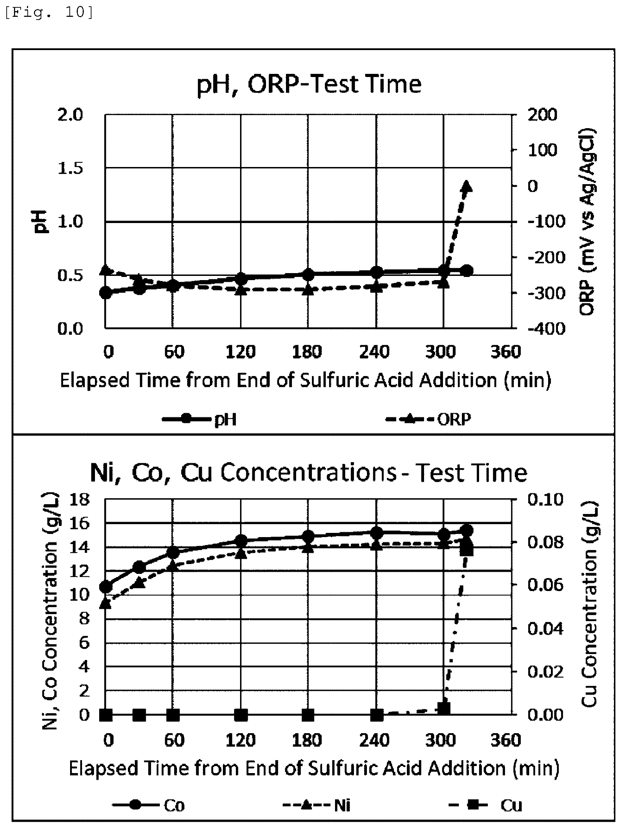

   Fig. 10 is a graph illustrating changes in pH, ORP, and each metal concentration over time in a leaching step according to Comparative Example.

### [Description of Embodiments]

Embodiments of the method for leaching metals and the method for recovering metals as described above will be described below in detail.

The method for leaching metals according to an embodiment is a method of leaching at least one metal in battery powder containing at least copper and one or more of cobalt and nickel. The method for leaching the metal includes a leaching step that is repeated multiple times, as shown in Fig. 1. The leaching process includes a first leaching step and a second leaching step.

In the first leaching step, the metals in the battery powder are leached in an acidic leaching solution, the leaching is terminated before the copper begins to be dissolved, and the resulting leached residue is removed from the resulting leached solution. In the first leaching step, the leaching is terminated before the copper begins to be dissolved, so that the leached solution after removing the leached residue contains cobalt ions and/or nickel ions, but is substantially free of copper ions, as shown in Fig. 1. This leached solution can be sent to subsequent steps such as neutralization and solvent extraction.

The leached residue obtained in the first leaching step contains undissolved cobalt and/or nickel and copper remaining in the first leaching step, and subjected to the second leaching step in order to leach the cobalt and/or nickel. In the second leaching step, the metals in the leached residue of the first leaching step are leached in an acidic leaching solution, and after the copper begins to be dissolved, the leaching is terminated to obtain a leached solution. Here, by terminating the leaching after the copper begins to be dissolved, a part of the copper in the leached residue is leached, and cobalt and/or nickel is/are sufficiently leached.

In at least one leaching process, the second leaching step involves removing the leached residue from the leached solution. Preferably, the leached residue is removed from the leached solution in the second leaching step of each leaching process. This allows a part of the copper residue that has not been leached in the second leaching step to be separated and removed as a leached residue.

The leached solution obtained in the second leaching step of the leaching process is used as an acidic leaching solution in a first leaching step of a leaching process (a next leaching process) followed by the former leaching process. In the first leaching step of the next leaching process, copper ions in the above leached solution carried over from the second leaching step of that former leaching process (previous leaching process) are precipitated by a substitution reaction with a less-noble metal such as cobalt and/or nickel to transfer to the leached residue, which is sent to the second leaching step. On the other hand, the cobalt ions and/or nickel ions in the leached solution carried over from the previous leaching process are contained in the leached solution of the first leaching step together with the cobalt ions and/or nickel ions eluted from fresh battery powder in the first leaching process, and send to a subsequent step after the leached residue is removed.

The leaching process as described above allows the cobalt and/or nickel to be sufficiently leached while easily removing the copper, as compared to a single leaching step.

This embodiment can be used in processes for recovering predetermined metals, such as valuable metals, from lithium ion battery waste. Described herein is, as an example, a case where the method for leaching metals is applied to a metal leaching step in a method for recovering metals in lithium ion battery waste as illustrated in Fig. 2. However, the method for leaching metals is not limited to this example, and it can be used for various methods including a step of leaching metals in battery powder of lithium ion battery waste in an acidic leaching solution. Moreover, if the battery powder containing copper and one or more of cobalt and nickel is to be treated, it is not necessarily limited to lithium ion battery waste. It is also possible to use battery powder obtained from battery waste that does not derived from lithium ion batteries.

### (Lithium ion battery waste)

Lithium ion battery waste of interest is vehicle lithium ion secondary batteries or consumer electronics lithium ion secondary batteries, which have been discarded due to battery product life, manufacturing failure, or other reasons. The vehicle lithium ion secondary batteries include those contained in vehicle battery packs mounted on vehicles such as hybrid vehicles and electric vehicles. The consumer electronics lithium ion secondary batteries include those used in various electronic devices such as mobile phones. Recovery of valuable metals such as cobalt, nickel and other valuable metals from such lithium ion battery waste is required from the viewpoint of effective utilization of resources. In addition, the other valuable metals may include, for example, manganese and lithium.

The vehicle battery pack generally includes a metal case forming a housing around the case, a battery having a plurality of battery cells such as lithium secondary ion batteries and other components that are housed inside the case. There are vehicle battery packs having various shapes, depending on the space constraints of the vehicles on which they are mounted. For example, there is a vehicle battery pack having a vertically long outer shape which is longer in one direction, such as a rectangular parallelepiped shape that is substantially rectangular in a plane view.

The lithium ion battery waste typically includes: a cathode material in which a cathode active material comprised of single metal oxides of one or more of lithium, nickel, cobalt and manganese, or two or more composite metal oxides is applied and fixed onto an aluminum foil (a cathode substrate) via, for example, an organic binder such as polyvinylidene fluoride (PVDF); an anode material made of a carbon-based material; and an organic electrolytic solution such as ethylene carbonate or diethyl carbonate or other electrolyte. In addition, the lithium ion battery waste may contain copper, iron, and the like.

### (Pretreatment step)

The pretreatment step may include a heat treatment, a crushing treatment and a sieving treatment in this order or in random order, but at least one of them may be omitted. The lithium ion battery waste is subjected to the pretreatment step to obtain the battery powder. As used herein, the battery powder refers to powder obtained by subjecting the lithium ion battery waste to any pretreatment step to separate and concentrate cathode material components. The battery powder may be obtained as powder by subjecting the lithium ion battery waste to the crushing treatment and the sieving treatment, with or without the heat treatment, thereby concentrating the cathode material components.

Here, an example of a case where the heat treatment is performed will be described below in detail. As an example of a case where the heat treatment is not performed, there is the following technique or the like: the residual electricity of the lithium ion battery waste is first discharged, and then crushed and sieved; and the resulting cathode material with the aluminum foil is then treated with a solvent to dissolve the binder, and the cathode electrode material components are separated from the aluminum foil and recovered.

When the heat treatment is performed, the heat treatment involves heating the lithium ion battery waste. An atmosphere in this case may be an inert atmosphere or an air atmosphere. The heat treatment may also be performed at a plurality of stages under different heating temperature conditions and different atmospheric conditions. For example, the heat treatment may be first performed in an inert atmosphere, and the atmosphere may be then changed to perform the heat treatment in the air atmosphere. The atmosphere for this heat treatment can be appropriately selected in view of various factors such as characteristics of each atmosphere and working efficiency, which will be described later.

More particularly, the heat treatment in the inert atmosphere can be performed in an atmosphere containing at least one selected from the group consisting of nitrogen, carbon dioxide and water vapor. Among them, an atmosphere mainly containing nitrogen is preferable. The heat treatment may be performed while allowing such an inert gas to flow. Oxygen may be contained in a trace amount to some extent, and an oxygen partial pressure during heat treatment can be maintained in a range of 0 atm to 4 × 10² atm as measured by a zirconia-type oxygen concentration meter. When the inert gas is introduced into a heat treatment furnace, it is preferable that the oxygen concentration of the inert gas may be 0.05% by volume to 4.00% by volume, and the flow rate in the heat treatment furnace may be 6 m³/hr to 60 m³/hr. Also here, the lithium ion battery waste can be heated to reach and maintain a temperature of 400°C to 800°C.

The heat treatment in the air atmosphere can suppress a foaming phenomenon in acid leaching in the metal leaching step. Substances resulting from incomplete pyrolysis of the heat treatment in the inert atmosphere can cause the foaming during acid leaching.

The heat treatment in the air atmosphere is preferable because any adjustment of the atmosphere becomes unnecessary and simple. At this time, the lithium ion battery waste can be heated to reach and maintain a temperature of 400°C to 800°C.

For the heat treatment, for example, an atmospheric electric furnace or atmospheric muffle furnace can be used in the case of a batch type, or a roller hearth kiln, mesh belt kiln, pusher kiln or the like can be used in the case of a continuous type. Among them, the roller hearth kiln and pusher kiln are preferred because they are suitable for large-scale processing.

The crushing treatment is carried out, for example, in order to remove the battery from the case of the vehicle battery pack in the lithium ion battery waste and destroy the housing of the battery, and also selectively separate the cathode active material from the aluminum foil coated with the cathode active material. Here, various known devices or equipment can be used, and specific examples thereof include an impact-type crusher capable of crushing the case and the battery by applying an impact while cutting them, such as a sample mill, a Hammer mill, a pin mill, a wing mill, a tornado mill, a hammer crusher and the like. A screen can be installed at the outlet of the crusher, so that the battery is discharged from the crusher through the screen when the battery is crushed to have a size that can pass through the screen.

After the crushing step, if necessary, the crushed battery is roughly pulverized or powdered into powder, and then sieved using a sieve having an appropriate mesh size. As a result, aluminum, copper and the like can remain on the sieve, for example, and battery powder containing lithium, cobalt, nickel and the like from which aluminum, copper, and the like have been removed to some extent can be obtained under the sieve.

It should be noted that the battery powder can optionally be brought into contact with a liquid such as water to selectively leach lithium prior to a leaching process as described below. In this case, tap water, industrial water, distilled water, purified water, ion-exchanged water, pure water, ultrapure water, and the like can be used, and a liquid temperature at the time of contact of the battery powder with the liquid can be 10°C to 60°C. The lithium-dissolved solution obtained by the leaching of lithium can be subjected to treatments such as solvent extraction, neutralization, and carbonation, thereby recovering lithium in the lithium-dissolved solution as lithium carbonate. The lithium carbonate thus obtained may optionally be purified to reduce impurity grade.

### (Leaching Process)

The battery powder after the pretreatment step or the battery powder as the residue after the leaching of lithium as described above contains at least copper and one or more metals selected from cobalt and nickel. Typically, the battery powder may contain cobalt, nickel, manganese, lithium, aluminum, copper, iron, and the like. In the metal leaching step, the battery powder is brought into contact with an acidic leaching solution to obtain a leached solution containing cobalt ions and/or nickel ions.

The pH of the acidic leaching solution at the time of leaching is preferably -0.5 to 3.0, and the pH of the leaching solution at the end of leaching may be 0.5 to 2.0. During leaching, for example, an agitator may optionally be used to agitate the acidic leaching solution at 100 rpm to 400 rpm, and the liquid temperature may be adjusted to 65°C to 70°C.

In this embodiment, a given leaching process is repeated multiple times to improve a leaching rate of cobalt and/or nickel while removing copper. More particularly, in the leaching process, as shown in Fig. 1, a first leaching step and a second leaching step are performed in this order. Described herein is, as an example, a case where the battery powder contains cobalt, nickel and copper, but it may not contain either cobalt or nickel, and alternatively, it may further contain other metal(s).

For the first leaching process, in the first leaching step, the battery powder is brought into contact with an acidic leaching solution to leaching metals in the battery powder, but before copper begins to be dissolved, the leaching is terminated and the leached residue is removed from the leached solution by solid-liquid separation. This results in a leached solution containing cobalt ions and nickel ions but containing no copper ions. The leached solution is sent to subsequent steps such as impurity removal, which will be described below. On the other hand, the leached residue will contain undissolved, remaining cobalt and nickel, as well as will contain copper. In order to further leach cobalt and nickel from the leached residue, a second leaching step is performed.

In the second leaching step, the leached residue is brought into contact with an acidic leaching solution to leach the metals in the leached residue. In this case, the leaching is continued even after the copper begins to be dissolved. This allows substantially all cobalt and/or nickel in the leached residue to be leached out. Once cobalt and nickel are sufficiently leached after the copper begins to be dissolved, the leaching is terminated and the leached residue is removed by solid-liquid separation, resulting in the leached residue which contains copper and is substantially free of cobalt and nickel. The leached solution from which the leached residue has been removed contains cobalt ions, nickel ions and copper ions.

It should be noted that, in the second leaching step, fresh battery powder may be added to leach not only the metals in the leached residue of the first leaching step, but also the metals in the fresh battery powder. In the second leaching step, the leaching is continued even after the copper begins to be dissolved, so that cobalt and nickel in the fresh battery powder can also be sufficiently leached.

Subsequently, in the second leaching process (next leaching process), the leached solution obtained in the second leaching step of the first leaching process (previous leaching process) is used as an acidic leaching solution in the first leaching step. In this case, if necessary, a fresh acidic leaching solution may be added. In the first leaching step, copper ions in the leached solution are reduced by a substitution reaction due to a metal that is less noble than copper in the fresh battery powder introduced into the first leaching step, and are precipitated as copper, which will be contained in the leached residue. In the first leaching step, cobalt and nickel are eluted from the fresh battery powder, but it is terminated before copper begins to be dissolved, so that the leached residue will contain copper derived from the fresh battery powder as well as undissolved, remaining cobalt and/or nickel. This leached residue is removed from the leached solution by solid-liquid separation, and subjected to the leaching of metals in the second leaching step. The leached solution from which the leached residue has been removed contains not only the cobalt ions and nickel ions beginning to be eluted from the fresh battery powder, but also the cobalt ions and nickel ions carried over from the first leaching process, and is sent to the subsequent step.

When the leached solution obtained in the second leaching step of the previous leaching process is used as the acidic leaching solution in the first leaching step of the next leaching process, the amount of substance of metal(s) that are less noble than copper, in the battery powder subjected to the next first leaching step, is preferably greater than the amount of substance of metal that are less noble than copper required for causing the substitution reaction with all of the copper ions in the leached solution obtained in the previous second leaching step. As a result, in the next first leaching step, theoretically all the copper ions in the leached solution can effectively be reduced by the less-noble metals in the battery powder. Among the metals that can be contained in the battery powder, examples of metals that are less noble than copper include cobalt, nickel, manganese, lithium, iron, and aluminum. The total amount of substance of those metals in the fresh battery powder to be introduced in the next leaching process may be larger than the amount of substance of the less-noble metal required for causing the substitution reaction with all of the copper ions in the previously obtained leached solution.

The second leaching step of the second leaching process is carried out in the same manner as the second leaching step of the first leaching process, and so the repeated descriptions thereof will be omitted. The solid-liquid separation in the second leaching step need not be performed in every leaching process. If solid-liquid separation is not performed in the second leaching step, the leached solution including the leached residue is sent to the next leaching process, and copper will accumulate in the leached residue. If solid-liquid separation is performed in the second leaching step of at least one of the leaching processes, the leached residue containing copper can be separated and removed in the second leaching step at the present stage. Preferably, the solid-liquid separation is performed in the second leaching step in each leaching process, and the leached residue containing copper is removed each time.

As used herein, the phrase "before the copper begins to be dissolved " in the first leaching step means that the copper ion concentration in the acidic leaching solution is lower than that in the leached solution obtained in the second leaching step of the leaching process at the present stage. For example, the time when the copper ion concentration in the acidic leaching solution is 0.01 g/L or less may be regarded as "before copper begins to be dissolved". However, it is to understand that this copper ion concentration does not include the copper ion concentration of the leached solution obtained in the second leaching step of the previous leaching process and used as the acidic leaching solution in the first leaching step of the present leaching process. When the leached solution obtained in the second leaching step of the previous leaching process is used as the acidic leaching solution in the first leaching step, a period of time during which after the period of time when the relatively high copper ion concentration before leaching tends to be reduced by the precipitation of copper due to the substitution reaction is terminated, and once the copper ion concentration is 0.01 g/L or less, for example, the copper ion concentration is 0.01 g/L or less, may be regarded as "before copper begins to be dissolved". In this case, it may be terminated in the period of time during which the copper ion concentration is 0.01 g/L or less (before the copper ion concentration exceeds 0.01 g/L).

Also, as used herein, the phrase "after the copper begins to be dissolved" in the second leaching step means a state where the copper ion concentration in the acidic leaching solution is higher than that in the leached solution obtained in the first leaching step of the present leaching process. Therefore, in each of the leaching processes, the copper ion concentration of the leached solution obtained in the second leaching step becomes higher than the copper ion concentration of the leached solution obtained in the first leaching step. For example, the time when the copper ion concentration in the acidic leaching solution is higher than 0.01 g/L may be regarded as "after the copper begins to be dissolved". In the second leaching step, the leaching may be terminated, for example, after the copper ion concentration of the acidic leaching solution is higher than 0.01 g/L.

In the first leaching process and the second leaching process, the oxidation-reduction potential (on a silver/silver chloride potential basis) of the acidic leaching solution may be sufficiently lower than 0 mV before leaching, and gradually increase as the leaching progresses. Hereinafter, the "oxidation-reduction potential (on a silver/silver chloride potential basis)" is simply referred to as "oxidation-reduction potential". This oxidation-reduction potential may be referred to as ORP.

In the first leaching step, the leaching is terminated before the oxidation-reduction potential of the acidic leaching solution is preferably 0 mV or higher, more preferably higher than -300 mV. This is because when the oxidation-reduction potential increases, the copper ion concentration may increase to some extent, so that the leached solution may contain copper ions.

On the other hand, in the second leaching step, it is preferable to terminate the leaching after the oxidation-reduction potential of the acidic leaching solution reaches 0 mV or higher. As a result, a larger amount of cobalt or nickel can be leached, so that loss of cobalt or nickel is suppressed. However, in the second leaching step, it is preferable to terminate the leaching before the oxidation-reduction potential of the acidic leaching solution is higher than 60 mV in order to prevent excessive leaching of copper.

Further, in the first leaching step and the second leaching step, when the leaching of metals proceeds to some extent, an amount of an increase in the oxidation-reduction potential of the acidic leaching solution tends to increase. In order to suppress the leaching of copper, the first leaching step is preferably terminated before an amount of an increase in the oxidation-reduction potential of the acidic leaching solution per hour reaches 233 mV or more. On the other hand, in the second leaching step, it is preferable to terminate the second leaching step after the amount of the increase in the oxidation-reduction potential of the acidic leaching solution per hour is 233 mV or more, from the viewpoint of leaching cobalt and nickel as much as possible. As used herein, the amount of the increase in the oxidation-reduction potential per hour means a value obtained by subtracting the value of the oxidation-reduction potential on one hour before that a predetermined period of time from the value of the oxidation-reduction potential at that period of time.

In the first leaching step and the second leaching step, for example, the leaching can be regarded as terminated when the agitation by the agitator that has been performed at the time of leaching is stopped, and the next operation such as solid-liquid separation or the addition of fresh battery powder is started. The solid-liquid separation for removing the leached residue from the leached solution can be performed by a known apparatus and method such as a filter press or a thickener.

The leaching process may include not only the first leaching step and the second leaching step, but also three or more leaching steps. For example, it would be considered that the first leaching step and/or the second leaching step is/are performed in multiple stages. In this case, all of the first leaching steps performed at the multiple stages are terminated while the copper ion concentration in the acidic leaching solution is lower than the copper ion concentration in the leached solution obtained in the second leaching step. For example, each of the first leaching steps may be terminated while the copper ion concentration of the acidic leaching solution is 0.01 g/L or less. In each of the second leaching steps performed at the multiple stages, the leaching is terminated after the copper ion concentration in the acidic leaching solution becomes higher than the copper ion concentration in the leached solution obtained in the first leaching step. For example, in each of the second leaching steps, the leaching may be terminated after the copper ion concentration of the acidic leaching solution becomes higher than 0.01 g/L.

When repeating the above leaching process multiple times, the migration of cobalt and/or nickel to the leaching residue of the second leaching step leads to loss of cobalt and/or nickel, so that it is desirable to suppress it as much as possible. More particularly, for the battery powder containing cobalt, when, on a mass basis, the total or sum of the cobalt content of the battery powder to be subjected to the first leaching step of the target leaching process and the cobalt ion content of the acidic leaching solution used in the first leaching step of that leaching process is 100%, the total of the cobalt ion content of the leached solution obtained in the first leaching step and the cobalt ion content of the leached solution obtained in the second leaching step is preferably 95% or more, in each of the leaching processes. Further, for the battery powder containing nickel, when, on a mass basis, the total or sum of the nickel content of the battery powder to be subjected to the first leaching step of the target leaching process and the nickel ion content of the acidic leaching solution used in the first leaching step of that leaching process is 100%, the total of the nickel ion content in the leached solution obtained in the first leaching step and the nickel ion content of the leached solution obtained in the second leaching step is preferably 95% or more in each of the leaching processes. Here, for the first leaching process, both the cobalt ion content and the nickel ion content of the acidic leaching solution used in the first leaching step are zero. Further, in each of the second and subsequent leaching processes, the cobalt ion content or nickel ion content of the acidic leaching solution used in the first leaching step described above means the cobalt ion content or the nickel ion content of the leached solution obtained in the second leaching process of the previous leaching process that is the one before the above leaching process, which leached solution is used as the acidic leaching solution in the first leaching step.

By repeating the leaching process multiple times, the leached solution obtained in each first leaching step contains substantially no copper ions, but contains cobalt and nickel. This leached solution may further contain at least one selected from the group consisting of manganese, lithium, aluminum and iron.

### (Impurity Removal/Metal Recovery Step)

After removing impurities from the leached solution after removing the leached residue in the first leaching step of each of the leaching processes as described above, that leached solution may be subjected to a step of recovering at least one metal such as cobalt and nickel. For example, the removal of impurities includes removal of some of aluminum and iron by neutralization, and removal of the remaining aluminum and manganese by solvent extraction. In the recovery of metals, cobalt and nickel can be recovered by sequentially extracting and back-extracting cobalt and nickel by solvent extraction. Further, lithium can be recovered by various methods from the extraction residue after recovering cobalt and nickel. For example, when the extraction residue is an aqueous lithium sulfate solution, a hydroxylation step of preparing an aqueous lithium hydroxide solution from the aqueous lithium sulfate solution and a crystallization step of precipitating the aqueous lithium hydroxide solution can be carried out.

### [Examples]

Next, the method for leaching metals as described above was experimentally carried out and the effects thereof were confirmed, as described below. However, the descriptions herein are merely for illustrative and are not intended to be limited.

### (Example 1)

Battery powder obtained by treating lithium ion battery waste was subjected to the leaching process shown in Fig. 1, which was repeated three times to obtain a leached solution. Here, changes in pH, ORP, and concentration in the solution were confirmed in the first leaching step and the second leaching step in each leaching process. Specifically, it is as follows.

In the first leaching process, six elements of Ni, Co, Mn, Li, Al, and Fe in total were selected as metals to be leached, and the molar equivalent of sulfuric acid required for leaching was calculated from each metal content in the battery powder calculated from the weight and grade, and 1.1 times the molar equivalent was determined to be an amount of sulfuric acid added as an acidic leaching solution.

In the first leaching step of the first leaching process, an amount of 80% of sulfuric acid with respect to 1.1-fold molar equivalents was added over 120 minutes, and the leaching was terminated after 300 minutes from the end of the addition of sulfuric acid (before copper begun to be dissolved). The pulp density was adjusted so that the Ni concentration after leaching was 20 g/L. The liquid temperature was 70°C.

In the second leaching step, an amount of 20% of sulfuric acid with respect to 1.1-fold molar equivalents was added over 30 minutes, and the leaching was terminated after 300 minutes from the end of the addition of sulfuric acid (before copper begun to be dissolved). The pulp density was adjusted so that the Ni concentration after leaching was 10 g/L. The liquid temperature was 70°C.

Figs. 3 and 4 show changes in pH, ORP, and each metal concentration over time from the end of the addition of sulfuric acid for the first and second leaching steps of the first leaching process, respectively. Here, each metal concentration was measured by analyzing the leached solution with an ICP emission spectrometer. In the first leaching step, as shown in Fig. 3, the pH changed from 1.14 to 1.61 and the ORP changed from -283 mV to -340 mV during the reaction. In the first leaching step, the concentrations in the solution increased to 15.6 g/L for Ni, 16.4 g/L for Co, and 0 g/L (0.01 g/L or less) for Cu. In the second leaching step, as shown in Fig. 4, the pH changed from -0.15 to 0.02 and the ORP changed from -293 mV to 123 mV during the reaction. Further, in the second leaching step, as shown in Fig. 4, the concentrations in the solution increased to 10.3 g/L for Ni, 8.0 g/L for Co, and 8.0 g/L for Cu. In the second leaching step, the amount of the increase in the oxidation-reduction potential of the acidic leaching solution per hour was 303 mV at the highest point (a point where the slope of the graph is steep).

The second leaching process was carried out by substantially the same method as that of the first leaching process, with the exception that the leached solution obtained in the second leaching step of the first leaching process was used as the acidic leaching solution for the first leaching step, and the proportion of sulfuric acid added was changed accordingly. However, in the second leaching step, the leaching was terminated after 180 minutes from the termination of the addition of sulfuric acid (after the copper begun to be dissolved). For the percentage of sulfuric acid added, in the first leaching step, it was 80% with respect to 1.1-fold molar equivalents of sulfuric acid, and the amount of newly added sulfuric acid was given by the equation: (newly added amount, mol) = (1.1-fold equivalents) X 80 (%) - (amount of sulfuric acid in leached solution in second leaching step) - (amount of Cu in leached solution in second leaching step). In all of the second leaching steps, sulfuric acid was newly added in an amount of 20% with respect to 1.1-fold molar equivalents of sulfuric acid.

Figs. 5 and 6 show changes in pH and ORP and each metal concentration over time from the end of the addition of sulfuric acid for the first and second leaching steps of the second leaching process, respectively. In the first leaching step, as shown in Fig. 5, the pH changed from 1.27 to 1.7 and the ORP changed from -250 mV to -336 mV during the reaction. Further, in the first leaching step, as shown in the Fig. 5, the concentrations in the solution increased to 15.3 g/L for Ni, 16.2 g/L for Co, and 0 g/L (0.01 g/L or less) for Cu. In the second leaching process, the leached solution obtained in the second leaching step of the first leaching process was used as the acidic leaching solution in the first leaching step. Nevertheless, Cu was 0 g/L at the end of the addition of sulfuric acid. This indicates that the copper ions contained in the acidic leaching solution are reduced by a substitution reaction with metals that are less noble than copper in the fresh battery powder introduced in the second leaching process. In the second leaching step, as shown in Fig. 6, the pH changed from 0.17 to 0.21 and the ORP changed from -312 to 34 mV during the reaction. Also, in the second leaching step, as shown in Fig. 6, the concentrations in the solution increased to 8.8 g/L for Ni, 7.6 g/L for Co, and 0.38 g/L for Cu. In the second leaching step, the amount of the increase in the oxidation-reduction potential of the acidic leaching solution per hour was 306 mV at the highest point.

In the third leaching process, as in the second leaching process, the leached solution obtained in the second leaching step of the previous leaching process (the second leaching process) was used as the acidic leaching solution in the first leaching step. The percentage of sulfuric acid added was also the same as that of the second leaching process.

Figs. 7 and 8 show changes in pH, ORP and each metal concentration over time from the end of addition of sulfuric acid for the first and second leaching steps of the third leaching process, respectively. In the first leaching step, as shown in Fig. 7, the pH changed from 1.22 to 1.73 and the ORP changed from -327 to -369 mV during the reaction. Also, in the first leaching step, as shown in Fig. 7, the concentrations in the solution increased to 15.1 g/L for Ni, 15.6 g/L for Co, and 0 g/L (0.01 g/L or less) for Cu. Also, in the third leaching process, Cu was 0 g/L at the end of the addition of sulfuric acid, as in the second leaching process. This indicates that the copper ions contained in the acidic leaching solution are reduced by a substitution reaction with metals that are less noble than copper in the fresh battery powder introduced in the third leaching process. In the second leaching step, as shown in Fig. 8, the pH changed from 0.27 to 0.46 and the ORP changed from -246 to 72 mV during the reaction. Also, in the second leaching step, as shown in Fig. 8, the concentrations in the solution increased to 8.0 g/L for Ni, 7.1 g/L for Co, and 1.8 g/L for Cu. In the second leaching step, the amount of the increase in the oxidation-reduction potential of the acidic leaching solution per hour was 233 mV at the highest point.

### (Example 2)

When the metals in the battery powder obtained by treating the lithium ion battery waste were leached by repeating the leaching process as shown in Fig. 1, the present inventors confirmed, to what degree, each metal was distributed to the leached solution and the leached residue.

Here, the leaching process as shown in Fig. 1 was repeated five times on the battery powder. In each leaching process, in the first leaching step, an amount of 80% with respect to 1.1-fold molar equivalents of sulfuric acid was added over 120 minutes, and after 300 minutes from the end of the addition of sulfuric acid (before copper begun to be dissolved), the leaching was terminated. The pulp density was adjusted so that the Ni concentration after leaching was 20 g/L. The liquid temperature was 70°C. In the second and subsequent leaching processes, the leached solution obtained in the second leaching step of the previous leaching process was completely used as the acidic leaching solution in the first leaching step, and the percentage of sulfuric acid added was 80% with respect to 1.1-fold molar equivalents, and the amount of newly added sulfuric acid was calculated by the equation: (newly added amount, mol) = (1.1 equivalents) x 80 (%) - (amount of sulfuric acid in leached solution in second leaching step) - (amount of Cu in leached solution in second leaching step). In the second leaching step, 20% with respect to 1.1-fold molar equivalents of sulfuric acid was added over 30 minutes, and the leaching was terminated when the ORP was in the range from 0 mV to 100 mV. The ORP at the end was 123 mV. The pulp density was adjusted so that the Ni concentration after leaching was 10 g/L. The liquid temperature was 70°C.

Table 1 shows distribution percentages of Co, Ni, Mn, Li, and Cu to the leached solution (Liquid) and leached residue (Residue) in the first leaching step (1st Leaching) and the second leaching step (2nd Leaching) in each leaching process; the total of an input amount (Input) and an output amount (Output); a result of determining its ratio; and reaction termination conditions. The distribution percentages in Table 1 are shown in percentages when the content of each metal in the battery powder charged in the first leaching process is 100%, on a mass basis. Also, Table 2 shows the total distribution percentage of the metals in the first to fifth leaching processes. The distribution percentages in Table 2 are shown in percentages when the content of each metal contained in the total amount (total input amount) of the battery powder input in the first to fifth leaching processes is 100%, on a mass basis. Further, "Liquid: 1st Leaching" means the content of each metal contained in the total amount of the leached solutions obtained in the first leaching steps (1st Leaching) in the first to fifth leaching processes, and "Liquid: 2nd Leaching" means the content of each metal contained in the leached solution obtained in the second leaching step (2nd Leaching) in the fifth leaching process. Furthermore, "Residue: 2nd Leaching" refers to the content of each metal contained in the total amount of the residues obtained in the second leaching steps (2nd Leaching) in the first to fifth leaching processes. Furthermore, Table 3 shows an amount of substance of Cu contained in the acidic leaching solution used in the second to fifth leaching processes, which was the leached solution obtained in the second leaching step in the process before each stage (Previous Cycle 2nd Leaching Filtrate); an amount of substance of each metal contained in the battery powder newly introduced in the second to fifth leaching processes, which metal was less noble than Cu; and an amount of substance of Cu (Cu Substance Amount Conversion) capable of causing a reduction substitution reaction with all the respective metals.

**[Table 1]**

| (unit: %) | | | | | | | |
|---|---|---|---|---|---|---|---|
| | | | 1st Cycle | 2nd Cycle | 3rd cycle | 4th Cycle | 5th Cycle |
| Co | Input | Material : Battery Powder | 100.0 | 96,6 | 96.2 | 94.6 | 93.0 |
| | | Liquid: Previous cycle 2nd stage | 0.0 | 9.0 | 12.3 | 5.1 | 7.2 |
| | | Total | 100.0 | 105.6 | 108.5 | 99.7 | 100.1 |
| | Output | Liquid: 1st Leaching | 90.5 | 92.7 | 102.3 | 91.9 | 90.9 |
| | | Liquid: 2nd Leaching | 9.0 | 12.3 | 5.1 | 7.2 | 8.9 |
| | | Total | 99.4 | 105.0 | 107.4 | 99.1 | 99.8 |
| | | Residue : 2nd Leaching | 0.6 | 0.6 | 1.1 | 0.6 | 0.4 |
| | | Output/Input | 99.4 | 99.4 | 99.0 | 99.4 | 99.6 |
| Ni | Input | Material : Battery Powder | 100.0 | 96.6 | 95.1 | 93.5 | 91.9 |
| | | Liquid: Previous Cycle 2nd Stage | 0.0 | 10.6 | 13.9 | 5.6 | 8.5 |
| | | Total | 100.0 | 107.3 | 109.0 | 99.1 | 100.4 |
| | Output | Liquid: 1st Leaching | 86.4 | 90.4 | 99.1 | 87.6 | 87.6 |
| | | Liquid: 2nd Leaching | 10.6 | 13.9 | 5.6 | 8.5 | 10.5 |
| | | Total | 97.0 | 104.3 | 104.7 | 96.1 | 98.2 |
| | | Residue : 2nd Leaching | 3.0 | 2.9 | 4.3 | 3.0 | 2.2 |
| | | Output/Input | 97.0 | 97.3 | 96.1 | 97.0 | 97.8 |
| Mn | Input | Material : Battery Powder | 100.0 | 96.6 | 95.9 | 94.3 | 92.7 |
| | | Liquid: Previous Cycle 2nd Stage | 0.0 | 0.1 | 0.2 | 0.4 | 0.2 |
| | | Total | 100.0 | 96.7 | 96.1 | 94.7 | 92.9 |
| | output | Liquid: 1st Leaching | 99.9 | 96.5 | 95.6 | 94.4 | 92.6 |
| | | Liquid: 2nd Leaching | 0.1 | 0.2 | 0.4 | 0.2 | 0.0 |
| | | Total | 100.0 | 96.7 | 96.1 | 94.7 | 92.7 |
| | | Residue : 2nd Leaching | 0.0 | 0.1 | 0.1 | 0.0 | 0.0 |
| | | Output/Input | 100.0 | 99.9 | 99.9 | 100.0 | 99.8 |
| Li | Input | Material : Battery Powder | 100.0 | 96.6 | 101.0 | 99.3 | 97.6 |
| | | Liquid: Previous Cycle 2nd Stage | 0.0 | 1.4 | 1.5 | 0.6 | 1.1 |
| | | Total | 100.0 | 98.0 | 102.5 | 99.9 | 98.7 |
| | Output | Liquid: 1st Leaching | 97.5 | 94.4 | 100.4 | 97.8 | 96.7 |
| | | Liquid: 2nd Leaching | 1.4 | 1.5 | 0.6 | 1.1 | 1.5 |
| | | Total | 98.8 | 95.9 | 101.0 | 98.9 | 98.2 |
| | | Residue : 2nd Leaching | 1.2 | 2.1 | 1.5 | 0.0 | 0.5 |
| | | Output/Input | 98.8 | 97.8 | 98.5 | 99.0 | 99.5 |
| Cu | Input | Material : Battery Powder | 100.0 | 96.6 | 111.5 | 109.6 | 107.7 |
| | | Liquid: Previous Cycle 2nd Stage | 0.0 | 0.1 | 1.7 | 42.8 | 16.6 |
| | | Total | 100.0 | 96.7 | 113.2 | 152.3 | 124.2 |
| | output | Liquid: 1st Leaching | 0.0 | 0.0 | 0.0 | 0.0 | 0.0 |
| | | Liquid: 2nd Leaching | 0.1 | 1.7 | 42.8 | 16.6 | 5.7 |
| | | Total | 0.1 | 1.7 | 42.8 | 16.6 | 5.7 |
| | | Residue : 2nd Leaching | 99.9 | 95.0 | 70.4 | 135.8 | 118.5 |
| | | Output/Input | 0.1 | 1.8 | 37.8 | 10.9 | 4.6 |
| Reaction Termination Conditions | 1st Stage | pH | 1.31 | 1.49 | 1.79 | 1.36 | 1.66 |
| | | ORP (mV vs Ag/AgCl) | -335 | -324 | -310 | -327 | -332 |
| | 2nd Stage | pH | -0.24 | 0.19 | 0 | -0.17 | 0 |
| | | ORP (mV vs Ag/AgCl) | 8 | 57 | 97 | 52 | 51 |

**[Table 2]**

| (unit: %) | | | | | |
|---|---|---|---|---|---|
| | Co | Ni | Mn | Li | Cu |
| Material: Battery Powder | 100.0 | 100.0 | 100.0 | 100.0 | 100.0 |
| Liquid: 1st Leaching | 97.5 | 94.6 | 99.9 | 98.4 | 0.0 |
| Liquid: 2nd Leaching | 1.8 | 2.2 | 0.0 | 0.3 | 1.1 |
| Residue: 2nd Leaching | 0.7 | 3.2 | 0.0 | 1.1 | 98.9 |

**[Table 3]**

| | | | 2nd Cycle | 3rd Cycle | 4th Cycle | 5th Cycle |
|---|---|---|---|---|---|---|
| Previous cycle 2nd | Cu Substance Amount | (mmol) | 0.03 | 0.63 | 16.14 | 0.44 |
| Material: Battery Powder | Cu Substance Amount Conversion | (mmol) | 1933.71 | 1949.97 | 1916.36 | 1883.38 |
| | Substance Amount (mmol) | Ni | 353.55 | 348.07 | 342.07 | 336.19 |
| | | Co | 351.04 | 349.70 | 343.68 | 337.76 |
| | | Fe | 1.70 | 1.23 | 1.21 | 1.19 |
| | | Mn | 308.65 | 306.48 | 301.19 | 296.01 |
| | | Al | 382.65 | 389.24 | 382.53 | 375.95 |
| | | Li | 689.61 | 721.24 | 708.81 | 696.61 |

It is found from Table 2 that Co transferred to the leached solution at 99.3% (97.5% in the first leaching + 1.8% in the second leaching) and to the leached residue at 0.7%, and that Ni transferred to the leached solution at 96.8% (94.6% in the first leaching + 2.2% in the second leaching) and to leached residue at 3.2%. On the other hand, Cu had a distribution percentage of 0.0% in the leached solution in the first leaching step. From the results, it can be said that cobalt and/or nickel could be leached at a higher leaching rate while effectively suppressing Cu from being mixed into the final leached solution.

Also, as can be seen from Table 1, a ratio (Output/Input) of the total (Output) of both Co and Ni contents in the leached solution obtained in the first leaching step and those in the leached solution obtained in the second leaching step to the total (Input) of both Co Ni contents in the battery powder newly introduced in each leaching process and those in the leached solution used as the acidic leaching solution (the leached solution obtained in the previous leaching process) was 95% or more.

Further, in the second leaching step in each leaching process, the copper ion content of the acidic leaching solution during leaching was 16.6% by mass or less when the ORP was 57 mV (60 mV or less), but it was 42.8% by mass, which was a higher value, when the ORP was 97 mV (more than 60 mV). This indicates that in the second leaching step, it is preferable to terminate the leaching before the oxidation-reduction potential of the acidic leaching solution becomes higher than 60 mV, in order to suppress excessive leaching of copper.

It should be noted that, in each leaching process, Mn and Li are also contained in the leached solution obtained in the second leaching step, although they are in smaller amounts than those of Co and Ni. Therefore, it can be said that manganese and lithium are leached at a higher leaching rate while effectively suppressing Cu from being mixed into the final leached solution.

Furthermore, as can be seen from Table 3, the amount of substance of the metal contained in the battery powder newly introduced in each leaching process, which is less noble than Cu, is higher than that of the less-noble metal required for causing the substitution reaction with all of the Cu ions in the leached solution obtained in the previous second leaching step. This indicates that in the first leaching step of each process, theoretically all the Cu ions in the leached solution can be effectively reduced by the less-noble metals in the battery powder.

### (Comparative Example)

The metals in the battery powder were leached in a single leaching step as shown in Fig. 9. Here, six elements of Ni, Co, Mn, Li, Al and Fe in total were the metals to be leached, and the molar equivalent of sulfuric acid required for leaching was calculated from the content of each metal in the battery powder calculated from the weight and grade, and 1.1 times the molar equivalent was used as the amount of sulfuric acid added as an acidic leaching solution.

As for the test conditions, the total amount of sulfuric acid was added for 120 minutes, and the leaching was terminated after 320 minutes of the determination of the addition of sulfuric acid. The pulp density was adjusted so that the Ni concentration after leaching was 20 g/L. The target for the termination of the reaction was ORP of 0 mV. The liquid temperature was 70°C.

Fig. 10 shows changes in pH, ORP, and each metal concentration over time. Table 4 also shows distribution percentages of Co, Ni, Mn, Li, and Cu to the leached solution (Liquid) and the leached residue (Residue). The distribution percentages in Table 4 are shown in percentages when the content of each metal in the battery powder to be input is 100%.

**[Table 4]**

| (unit : %) | | | | | |
|---|---|---|---|---|---|
| | Co | Ni | Mn | Li | Cu |
| Material | 100.0 | 100.0 | 100.0 | 100.0 | 100.0 |
| Liquid | 99.3 | 96.6 | 99.9 | 98.0 | 16.4 |
| Residue | 0.7 | 3.4 | 0.1 | 2.0 | 83.6 |

It is found from Table 4 that Co transferred to the leached solution at 99.3% and to the leached residue at 0.7%, and Ni transferred to the leached solution at 96.6% and to the leached residue at 3.4%. On the other hand, Cu transferred to the leached solution at 16.4%, and transferred to the leached residue at 83.6%. This indicates that a larger amount of copper was contained in the leached solution.

As described above, it was found that according to the method for leaching at least one metal as described above, cobalt and/or nickel can be sufficiently leached while easily removing copper.

## Claims

1. A method for leaching at least one metal present in battery powder, said battery powder comprising at least copper and one or more of cobalt and nickel to obtain a solution comprising one or more of cobalt ions and nickel ions,
the method comprising a leaching process repeating multiple cycles, the multiple cycles including a first cycle and a second cycle,
wherein the first cycle of the leaching process comprises:
a first leaching step of leaching at least one metal in the battery powder in an acidic leaching solution, and removing a leached residue from a resulting leached solution to obtain the solution comprising one or more of cobalt ions and nickel ions; and
a second leaching step of leaching at least one metal in the leached residue of the first leaching step in an acidic leaching solution,
wherein the second cycle of the leaching process comprises:
a third leaching step of leaching at least one metal present in fresh battery powder in an acidic leaching solution, and removing a leached residue from a resulting leached solution to obtain the solution comprising one or more of cobalt ions and nickel ions, wherein the leached solution obtained in the second leaching step of the first cycle is used as at least part of the acidic leaching solution in the third leaching step; and
a fourth leaching step of leaching at least one metal in the leached residue of the third leaching step in an acidic leaching solution, and
wherein the leached residue is removed from the leached solution in at least one of the second leaching step of the first cycle and the fourth leaching step of the second cycle.

2. The method according to claim 1,
wherein the leaching in the first leaching step of the first cycle and/or the third leaching step of the second cycle is terminated before an oxidation-reduction potential (on a silver/silver chloride potential basis) of the acidic leaching solution is 0 mV or more, and
wherein the leaching of the second leaching step of the first cycle and/or the fourth leaching step of the second cycle is terminated after the oxidation-reduction potential (on a silver/silver chloride potential basis) of the acidic leaching solution is 0 mV or more.

3. The method according to claim 2, wherein the leaching in the first leaching step of the first cycle and/or the third leaching step of the second cycle is terminated before the oxidation-reduction potential (on a silver/silver chloride potential basis) of the acidic leaching solution is higher than -300 mV.

4. The method according to claim 2 or 3, wherein the leaching in the first leaching of the first cycle step and/or the third leaching step of the second cycle is terminated before the oxidation-reduction potential (on a silver/silver chloride potential basis) of the acidic leaching solution is higher than 60 mV.

5. The method according to any one of claims 1 to 4,
wherein the leaching in the first leaching step of the first cycle and/or the third leaching step of the second cycle is terminated before an amount of an increase in the oxidation-reduction potential (on a silver/silver chloride potential basis) of the acidic leaching solution per hour is 233 mV or more; and
wherein the leaching of the second leaching step of the first cycle and/or the fourth leaching step of the second cycle is terminated after an amount of an increase in the oxidation-reduction potential (on a silver/silver chloride potential basis) of the acidic leaching solution per hour is 233 mV or more.

6. The method according to any one of claims 1 to 5,
wherein the battery powder comprises cobalt, and
wherein, when, on a mass basis, a total of a cobalt content of the fresh battery powder to be subjected to the third leaching step of the second cycle and a cobalt ion content of the acidic leaching solution used in the third leaching step of the second cycle is 100%, a total of a cobalt ion content of the leached solution obtained in the third leaching step of the second cycle and a cobalt ion content of the leached solution obtained in the fourth leaching step of the second cycle is 95% or more.

7. The method according to any one of claims 1 to 6,
wherein the battery powder comprises nickel, and
wherein, when, on a mass basis, a total of a nickel content of the fresh battery powder to be subjected to the third leaching step of the second cycle and a nickel ion content of the acidic leaching solution used in the third leaching step of the second cycle is 100%, a total of a nickel ion content of the leached solution obtained in the third leaching step of the second cycle and a nickel ion content of the leached solution obtained in the fourth leaching step of the second cycle is 95% or more.

8. The method according to any one of claims 1 to 7, wherein, when using the leached solution obtained in the second leaching step of the first cycle as an acidic leaching solution in the third leaching step of the second cycle, an amount of substance of metal(s) in the fresh battery powder subjected to said third leaching step of the second cycle, the metal(s) being less noble than copper, is higher than that of less-noble metal required for causing a substitution reaction with all of copper ions in said leached solution obtained in the second leaching step of the first cycle.

9. The method according to any one of claims 1 to 8, wherein the leached residue of the first leaching step of the first cycle and/or the third leaching step of the second cycle contains cobalt and nickel.

10. The method according to any one of claims 1 to 9, wherein the leached residue of the second leaching step of the first cycle and/or the fourth leaching step of the second cycle is free of cobalt and nickel.

11. The method according to any one of claims 1 to 10, wherein, in the second leaching step of the first cycle and/or the fourth leaching step of the second cycle, all cobalt and/or nickel in the leached residue are leached out.

12. A method for recovering at least one metal, comprising recovering at least one metal from the leached solution after removing the leached residue in the first leaching step of the first cycle and/or the third leaching step of the second cycle in the method for leaching at least one metal according to any one of claims 1 to 11.

## Patentansprüche

1. Verfahren zum Auslaugen mindestens eines Metalls, das in Batteriepulver vorliegt, das Batteriepulver umfassend mindestens Kupfer und eines oder mehrere von Kobalt und Nickel, um eine Lösung, umfassend eines oder mehrere von Kobaltionen und Nickelionen, zu erhalten,
das Verfahren umfassend einen Auslaugungsprozess, der mehrere Zyklen wiederholt, wobei die mehreren Zyklen einen ersten Zyklus und einen zweiten Zyklus einschließen,
wobei der erste Zyklus des Auslaugungsprozesses umfasst:
einen ersten Auslaugungsschritt zum Auslaugen mindestens eines Metalls in dem Batteriepulver in einer sauren Auslaugungslösung, und Entfernen eines ausgelaugten Rückstands aus einer resultierenden ausgelaugten Lösung, um die Lösung, umfassend eines oder mehrere von Kobaltionen und Nickelionen, zu erhalten; und
einen zweiten Auslaugungsschritt zum Auslaugen mindestens eines Metalls in dem ausgelaugten Rückstand des ersten Auslaugungsschritts in einer sauren Auslaugungslösung,
wobei der zweite Zyklus des Auslaugungsprozesses umfasst:
einen dritten Auslaugungsschritt zum Auslaugen mindestens eines Metalls, das in frischem Batteriepulver vorliegt, in einer sauren Auslaugungslösung, und zum Entfernen eines ausgelaugten Rückstands aus einer resultierenden ausgelaugten Lösung, um die Lösung, umfassend eines oder mehrere von Kobaltionen und Nickelionen, zu erhalten, wobei die ausgelaugte Lösung, die in dem zweiten Auslaugungsschritt des ersten Zyklus erhalten wird, als mindestens ein Teil der sauren Auslaugungslösung in dem dritten Auslaugungsschritt verwendet wird; und
einen vierten Auslaugungsschritt zum Auslaugen mindestens eines Metalls in dem ausgelaugten Rückstand des dritten Auslaugungsschritts in einer sauren Auslaugungslösung, und
wobei der ausgelaugte Rückstand aus der ausgelaugten Lösung in mindestens einem des zweiten Auslaugungsschritts des ersten Zyklus und des vierten Auslaugungsschritts des zweiten Zyklus entfernt wird.

2. Verfahren nach Anspruch 1,
wobei das Auslaugen in dem ersten Auslaugungsschritt des ersten Zyklus und/oder dem dritten Auslaugungsschritt des zweiten Zyklus beendet wird, bevor ein Redoxpotential (auf einer Silber-/Silberchlorid-Potentialbasis) der sauren Auslaugungslösung 0 mV oder mehr beträgt, und
wobei das Auslaugen des zweiten Auslaugungsschritts des ersten Zyklus und/oder des vierten Auslaugungsschritts des zweiten Zyklus beendet wird, nachdem das Redoxpotential (auf einer Silber-/Silberchlorid-Potentialbasis) der sauren Auslaugungslösung 0 mV oder mehr beträgt.

3. Verfahren nach Anspruch 2, wobei das Auslaugen in dem ersten Auslaugungsschritt des ersten Zyklus und/oder dem dritten Auslaugungsschritt des zweiten Zyklus beendet wird, bevor das Redoxpotential (auf einer Silber-/Silberchlorid-Potentialbasis) der sauren Auslaugungslösung höher als -300 mV ist.

4. Verfahren nach Anspruch 2 oder 3, wobei das Auslaugen in dem ersten Auslaugen des ersten Zyklusschritts und/oder dem dritten Auslaugungsschritt des zweiten Zyklus beendet wird, bevor das Redoxpotential (auf einer Silber-/Silberchlorid-Potentialbasis) der sauren Auslaugungslösung höher als 60 mV ist.

5. Verfahren nach einem der Ansprüche 1 bis 4,
wobei das Auslaugen in dem ersten Auslaugungsschritt des ersten Zyklus und/oder dem dritten Auslaugungsschritt des zweiten Zyklus beendet wird, bevor eine Menge einer Erhöhung des Redoxpotentials (auf einer Silber-/Silberchlorid-Potentialbasis) der sauren Auslaugungslösung pro Stunde 233 mV oder mehr beträgt; und
wobei das Auslaugen des zweiten Auslaugungsschritts des ersten Zyklus und/oder des vierten Auslaugungsschritts des zweiten Zyklus beendet wird, nachdem eine Menge einer Erhöhung des Redoxpotentials (auf einer Silber-/Silberchlorid-Potentialbasis) der sauren Auslaugungslösung pro Stunde 233 mV oder mehr beträgt.

6. Verfahren nach einem der Ansprüche 1 bis 5,
wobei das Batteriepulver Kobalt umfasst, und
wobei, wenn, auf einer Massenbasis, eine Gesamtheit eine Kobaltgehalts des frischen Batteriepulvers, das dem dritten Auslaugungsschritt des zweiten Zyklus unterzogen werden soll, und eines Kobaltionengehalts der sauren Auslaugungslösung, die in dem dritten Auslaugungsschritt des zweiten Zyklus verwendet wird, 100 % beträgt, eine Gesamtheit eines Kobaltionengehalts der ausgelaugten Lösung, die in dem dritten Auslaugungsschritt des zweiten Zyklus erhalten wird, und eines Kobaltionengehalts der ausgelaugten Lösung, die in dem vierten Auslaugungsschritt des zweiten Zyklus erhalten wird, 95 % oder mehr beträgt.

7. Verfahren nach einem der Ansprüche 1 bis 6,
wobei das Batteriepulver Nickel umfasst, und
wobei, wenn, auf einer Massenbasis, eine Gesamtheit eine Nickelgehalts des frischen Batteriepulvers, das dem dritten Auslaugungsschritt des zweiten Zyklus unterzogen werden soll, und eines Nickelionengehalts der sauren Auslaugungslösung, die in dem dritten Auslaugungsschritt des zweiten Zyklus verwendet wird, 100 % beträgt, eine Gesamtheit eines Nickelionengehalts der ausgelaugten Lösung, die in dem dritten Auslaugungsschritt des zweiten Zyklus erhalten wird, und eines Nickelionengehalts der ausgelaugten Lösung, die in dem vierten Auslaugungsschritt des zweiten Zyklus erhalten wird, 95 % oder mehr beträgt.

8. Verfahren nach einem der Ansprüche 1 bis 7, wobei, wenn die ausgelaugte Lösung, die in dem zweiten Auslaugungsschritt des ersten Zyklus erhalten wird, als eine saure Auslaugungslösung in dem dritten Auslaugungsschritt des zweiten Zyklus verwendet wird, eine Substanzmenge an Metall(en) in dem frischen Batteriepulver, das dem dritten Auslaugungsschritt des zweiten Zyklus unterzogen wird, wobei das/die Metall(e) unedler als Kupfer ist/sind, höher als die des unedleren Metalls ist, das zum Herbeiführen einer Substitutionsreaktion mit allen Kupferionen in der ausgelaugten Lösung, die in dem zweiten Auslaugungsschritt des ersten Zyklus erhalten wird, erforderlich ist.

9. Verfahren nach einem der Ansprüche 1 bis 8, wobei der ausgelaugte Rückstand des ersten Auslaugungsschritts des ersten Zyklus und/oder des dritten Auslaugungsschritts des zweiten Zyklus Kobalt und Nickel enthält.

10. Verfahren nach einem der Ansprüche 1 bis 9, wobei der ausgelaugte Rückstand des zweiten Auslaugungsschritts des ersten Zyklus und/oder des vierten Auslaugungsschritts des zweiten Zyklus frei von Kobalt und Nickel ist.

11. Verfahren nach einem der Ansprüche 1 bis 10, wobei, in dem zweiten Auslaugungsschritt des ersten Zyklus und/oder dem vierten Auslaugungsschritt des zweiten Zyklus, alles Kobalt und/oder Nickel in dem ausgelaugten Rückstand ausgelaugt wird.

12. Verfahren zum Rückgewinnen mindestens eines Metalls, umfassend das Rückgewinnen mindestens eines Metalls aus der ausgelaugten Lösung nach dem Entfernen des ausgelaugten Rückstands in dem ersten Auslaugungsschritt des ersten Zyklus und/oder dem dritten Auslaugungsschritt des zweiten Zyklus in dem Verfahren zum Auslaugen mindestens eines Metalls nach einem der Ansprüche 1 bis 11.

## Revendications

1. Procédé de lixiviation d'au moins un métal présent dans une poudre de batterie, ladite poudre de batterie comprenant au moins du cuivre et un ou plusieurs parmi du cobalt et du nickel afin d'obtenir une solution comprenant un ou plusieurs ions cobalt et ions nickel,
le procédé comprenant un processus de lixiviation répétant des cycles multiples, les cycles multiples comportant un premier cycle et un second cycle,
dans lequel le premier cycle du processus de lixiviation comprend :
une première étape de lixiviation consistant à lixivier au moins un métal dans la poudre de batterie dans une solution de lixiviation acide, et à éliminer un résidu lixivié d'une solution lixiviée résultante pour obtenir la solution comprenant un ou plusieurs ions cobalt et ions nickel ; et
une deuxième étape de lixiviation consistant à lixivier au moins un métal dans le résidu lixivié de la première étape de lixiviation dans une solution de lixiviation acide,
dans lequel le second cycle du processus de lixiviation comprend :
une troisième étape de lixiviation consistant à lixivier au moins un métal présent dans une poudre de batterie fraîche dans une solution de lixiviation acide, et à éliminer un résidu lixivié d'une solution lixiviée résultante pour obtenir la solution comprenant un ou plusieurs parmi des ions cobalt et des ions nickel, dans lequel la solution lixiviée obtenue dans la deuxième étape de lixiviation du premier cycle est utilisée comme au moins une partie de la solution de lixiviation acide dans la troisième étape de lixiviation ; et
une quatrième étape de lixiviation consistant à lixivier au moins un métal dans le résidu lixivié de la troisième étape de lixiviation dans une solution de lixiviation acide, et
dans lequel le résidu lixivié est éliminé de la solution lixiviée dans au moins l'une parmi la deuxième étape de lixiviation du premier cycle et la quatrième étape de lixiviation du second cycle.

2. Procédé selon la revendication 1,
dans lequel la lixiviation, lors de la première étape de lixiviation du premier cycle et/ou de la troisième étape de lixiviation du second cycle, est terminée avant que le potentiel d'oxydoréduction (sur une base de potentiel argent/chlorure d'argent) de la solution de lixiviation acide est égal ou supérieur à 0 mV, et
dans lequel la lixiviation de la deuxième étape de lixiviation du premier cycle et/ou de la quatrième étape de lixiviation du second cycle est terminée après que le potentiel d'oxydoréduction (sur une base de potentiel argent/chlorure d'argent) de la solution de lixiviation acide est égal ou supérieur à 0 mV.

3. Procédé selon la revendication 2, dans lequel la lixiviation, lors de la première étape de lixiviation du premier cycle et/ou de la troisième étape de lixiviation du second cycle, est terminée avant que le potentiel d'oxydo-réduction (sur une base de potentiel argent/chlorure d'argent) de la solution de lixiviation acide soit supérieur à -300 mV.

4. Procédé selon la revendication 2 ou 3, dans lequel la lixiviation, lors de la première étape de lixiviation de la première étape de cycle et/ou de la troisième étape de lixiviation du second cycle, est terminée avant que le potentiel d'oxydo-réduction (sur une base de potentiel argent/chlorure d'argent) de la solution de lixiviation acide soit supérieur à 60 mV.

5. Procédé selon l'une quelconque des revendications 1 à 4,
dans lequel la lixiviation, lors de la première étape de lixiviation du premier cycle et/ou de la troisième étape de lixiviation du second cycle, est terminée avant qu'une quantité d'une augmentation du potentiel d'oxydo-réduction (sur une base du potentiel argent/chlorure d'argent) de la solution de lixiviation acide soit égale ou supérieure à 233 mV par heure ; et
dans lequel la lixiviation, lors de la deuxième étape de lixiviation du premier cycle et/ou de la quatrième étape de lixiviation du second cycle, est terminée après qu'une quantité d'une augmentation du potentiel d'oxydo-réduction (sur une base de potentiel argent/chlorure d'argent) de la solution de lixiviation acide est égal ou supérieur à 233 mV par heure.

6. Procédé selon l'une quelconque des revendications 1 à 5,
dans lequel la poudre de batterie comprend du cobalt, et
dans lequel, lorsque, sur une base de masse, un total d'une teneur en cobalt de la poudre de batterie fraîche à soumettre à la troisième étape de lixiviation du second cycle et d'une teneur en ions cobalt de la solution de lixiviation acide utilisée dans la troisième étape de lixiviation du second cycle est de 100 %, un total d'une teneur en ions cobalt de la solution lixiviée obtenue dans la troisième étape de lixiviation du second cycle et d'une teneur en ions cobalt de la solution lixiviée obtenue dans la quatrième étape de lixiviation du second cycle est égal ou supérieur à 95 %.

7. Procédé selon l'une quelconque des revendications 1 à 6,
dans lequel la poudre de batterie comprend du nickel, et
dans lequel, lorsque, sur une base de masse, un total d'une teneur en nickel de la poudre de batterie fraîche à soumettre à la troisième étape de lixiviation du second cycle et d'une teneur en ions nickel de la solution de lixiviation acide utilisée dans la troisième étape de lixiviation du second cycle est de 100 %, un total d'une teneur en ions nickel de la solution lixiviée obtenue dans la troisième étape de lixiviation du second cycle et d'une teneur en ions nickel de la solution lixiviée obtenue dans la quatrième étape de lixiviation du second cycle est égal ou supérieur à 95 %.

8. Procédé selon l'une quelconque des revendications 1 à 7, dans lequel, lors de l'utilisation de la solution lixiviée obtenue lors de la deuxième étape de lixiviation du premier cycle en tant qu'une solution de lixiviation acide, lors d'une troisième étape de lixiviation du second cycle, une quantité de substance d'un ou plusieurs métaux dans la poudre de batterie fraîche soumise à ladite troisième étape de lixiviation du second cycle, le ou les métaux étant moins nobles que le cuivre, est supérieure à celle de métal moins noble nécessaire pour provoquer une réaction de substitution avec tous les ions cuivre dans ladite solution lixiviée obtenue dans la deuxième étape de lixiviation du premier cycle.

9. Procédé selon l'une quelconque des revendications 1 à 8, dans lequel le résidu lixivié de la première étape de lixiviation du premier cycle et/ou de la troisième étape de lixiviation du second cycle contient du cobalt et du nickel.

10. Procédé selon l'une quelconque des revendications 1 à 9, dans lequel le résidu lixivié de la deuxième étape de lixiviation du premier cycle et/ou de la quatrième étape de lixiviation du second cycle est exempt de cobalt et de nickel.

11. Procédé selon l'une quelconque des revendications 1 à 10, dans lequel, lors de la deuxième étape de lixiviation du premier cycle et/ou de la quatrième étape de lixiviation du second cycle, tout le cobalt et/ou le nickel dans le résidu lixivié est lixivié.

12. Procédé de récupération d'au moins un métal, comprenant la récupération d'au moins un métal de la solution lixiviée après l'élimination du résidu lixivié, lors de la première étape de lixiviation du premier cycle et/ou de la troisième étape de lixiviation du second cycle, dans le procédé pour lixivier au moins un métal selon l'une quelconque des revendications 1 à 11.
